# EUROPÄISCHE PATENTSCHRIFT

(11) **EP 1 099 065 B1**
(45) Veröffentlichungstag und Bekanntmachung des Hinweises auf die Patenterteilung: **11.12.2002**
(21) Anmeldenummer: 99932821.4
(22) Anmeldetag: 06.07.1999
(51) Int. Cl.: F16H 61/00, F16H 59/06

(54) **STEUERVERFAHREN UND STEUERVORRICHTUNG FÜR EIN STUFENLOSES GETRIEBE**
CONTROL METHOD AND CONTROL DEVICE FOR AN INFINITELY VARIABLE CHANGE-SPEED GEAR
PROCEDE ET DISPOSITIF DE COMMANDE POUR TRANSMISSION A REGLAGE CONTINU

(30) Priorität: 14.07.1998 DE 19831514
(43) Veröffentlichungstag der Anmeldung: 16.05.2001
(73) Patentinhaber: Bayerische Motoren Werke Aktiengesellschaft, 80809 München (DE)
(72) Erfinder: FUCHS, Emanuel, D-85777 Fahrenzhausen (DE); DAIEFF, Bertrand, D-80636 München (DE)
(86) Internationale Anmeldenummer: EP9904670
(87) Internationale Veröffentlichungsnummer: WO00004306

(56) Entgegenhaltungen:
- EP-A- 0 584 985
- EP-A- 0 676 564
- EP-A- 0 681 119
- DE-A- 4 312 718
- DE-A- 19 609 585
- DE-A- 19 713 399

## Beschreibung

Die Erfindung betrifft ein Steuerverfahren und eine Steuervorrichtung für ein stufenloses Getriebe gemäß den Oberbegriffen der Ansprüche 1 und 2 bzw. 9 und 10.

Bei Kraftfahrzeugen ist die Verwendung von stufenlosen Automatikgetrieben bekannt, bei denen eine Änderung der Übersetzung stufenlos und ohne Schaltpunkte über den gesamten Fahrbereich hinweg erfolgen kann. Dabei wird die Übersetzung meist in Abhängigkeit von Fahrzeugbetriebsbedingungen automatisch eingestellt und zwar so, daß der Motor in der Regel in der Nähe seines wirkungsoptimalen Betriebspunktes betreibbar ist. Solche stufenlosen Automatikgetriebe entlasten den Fahrer und können gegenüber konventionellen Schaltgetrieben einen höheren Gesamtwirkungsgrad erreichen, obwohl sie einen geringeren mechanischen Wirkungsgrad besitzen, da der Motor immer in der Nähe des wirkungsoptimalen Betriebspunktes läuft. Ferner ist bei stufenlosen Automatikgetrieben in der Regel die Spreizung größer und die Anzahl der möglichen Übersetzungen unbegrenzt.

Aus der DE-AS 12 24 580 ist ein stufenlos einstellbares Keilriemen-Wechselgetriebe bekannt, bei der die Verstellung des Keilriemens und damit die Einstellung der Übersetzung durch einen Hebel vorzunehmen ist, der gegen Verschieben sicherbar ist.

Aus der EP 0 217 221 A2 ist ein Verfahren zur Steuerung eines CVT-Getriebes und eines Hilfsgetriebes bekannt. Das CVT-Getriebe und das Hilfsgetriebe sind hierbei in Reihe geschaltet. Die Schaltpunkte des Hilfsgetriebes werden mittels gespeicherter Schaltmuster bestimmt. Die Auswahl eines zu verwendenden Schaltmusters erfolgt durch den Wählhebel.

Aus der DE 41 20 540 A sowie der EP 676 564 A2 sind jeweils Verfahren und Einrichtungen zur Steuerung eines stufenlosen Getriebes bekannt, wobei eine Steuereinheit vorgesehen ist, die eine erste Betriebsart aufweist, bei der die Übersetzung eines Getriebes in Abhängigkeit von Signalen einer Wähleinrichtung und Betriebsgrößen des Fahrzeugs selbständig eingestellt werden. Ferner ist eine zweite Betriebsart vorgesehen, in der ein vom Fahrer direkt beeinflussbares abgestuftes Getriebe nachgebildet wird. Die Schaltstufen bzw. die Anzahl und Spreizung des Getriebes können nach dem Fahrverhalten optimiert werden.

Nachteilig hierbei ist, dass die spezifischen Vorteile stufenloser Getriebe nicht berücksichtigt werden. Die letztgenannten Getriebe werden wie Quasi-Stufenautomaten behandelt.

Aus der gattungsgemäßen DE 196 09 585 A1 ist ein Verfahren zum Steuern eines stufenlosen Getriebes sowie eine Vorrichtung hierzu bekannt. Mit diesem Verfahren und dieser Vorrichtung ist die Einstellung einer beliebigen Übersetzung quasi stufenlos möglich. Jedoch entscheidet die Betätigungsweise des Bedienelements, ob eine wesentliche oder nur geringfügig größere bzw. kleinere Übersetzung eingestellt wird. So kann die Änderung der Übersetzung vom Verstellweg des Wählhebels, die auf ihn einwirkende Kraft oder seine Verstellgeschwindigkeit abgestellt werden. Auch kann eine Abhängigkeit davon hergestellt werden, wie lange der Wählhebel oder das Bedienelement in seiner Auslenkposition gehalten wird. So sind beliebige kleinere oder größere Übersetzungssprünge bei der Einstellung der Übersetzung möglich.

Aufgabe der Erfindung ist es, ein Verfahren und eine Vorrichtung für ein stufenloses Getriebe anzugeben, bei der für jede Fahrsituation oder für jeden Fahrwunsch eine passende Übersetzung innerhalb des Gesamtübersetzungsbereiches des Getriebes per Hand explizit ausgewählt werden kann und die spezifischen Vorteile stufenloser Getriebe berücksichtigt werden.

Diese Aufgabe wird durch die in den Ansprüchen 1 und 2 bzw. 9 und 10 angegebenen Merkmale verfahrens- bzw. vorrichtungstechnisch gelöst.

Demgemäß ist eine Wähleinrichtung vorgesehen, die mit einer Steuereinheit in Verbindung steht und an diese ein entsprechend einer Betätigung generiertes Signal abgibt. Die Wähleinrichtung umfaßt ein Bedienelement, welches zumindest in zwei Richtungen betätigbar ist, und das Steuerverfahren weist zumindest eine Betriebsart auf, bei der durch manuelle Betätigung der Wähleinrichtung die Getriebeübersetzung vom Fahrzeugbediener direkt beeinflußt werden kann, d. h. entsprechend dem Steuerbefehl des Fahrzeugbedieners wird das Übersetzungsverhältnis unmittelbar verändert.

In einer ersten Alternative erfolgt die Veränderung bei einer Betätigung der Wähleinrichtung in eine Richtung zunächst um eine Mindestverstellung des Übersetzungsverhältnisses zu einer längeren Übersetzung hin. Bei Fortdauer der Betätigung der Wähleinrichtung wird im Anschluß daran eine kontinuierliche Verstellung in Richtung einer längeren Übersetzung vorgenommen. Im Gegenzug wird bei einer Betätigung der Wähleinrichtung in die andere Richtung das Übersetzungsverhältnis zunächst um eine Mindestverstellung zu einer kürzeren Übersetzung hin verstellt und bei fortdauernder Betätigung der Wähleinrichtung in diese Richtung wird eine kontinuierliche Verstellung in Richtung einer kürzeren Übersetzung vorgenommen, und zwar solange wie die Wähleinrichtung betätigt wird.

In einer zweiten Alternative wird ab Beginn der Betätigung der Wähleinrichtung in eine Richtung das Übersetzungsverhältnis kontinuierlich mit einer ersten vorgegebenen Verstellgeschwindigkeit in Richtung einer längeren Übersetzung hin verstellt. Bei einem Abbruch der Betätigung der Wähleinrichtung vor Erreichen einer vorgegebenen Zeitdauer wird die Verstellung des Übersetzungsverhältnisses bis zu einem vordefinierten Betrag mit einer gegenüber der ersten vorgegebenen Verstellgeschwindigkeit erhöhten zweiten Verstellgeschwindigkeit vorgenommen. Hierbei kann z. B. die Mindestverstellung gemäß der ersten Alternative vorgenommen werden. Bei einer über die vorgegebene Zeitdauer hinaus fortdauernden Betätigung der Wähleinrichtung wird die kontinuierliche Verstellung in Richtung einer längeren Übersetzung mit einer dritten vorgegebenen Verstellgeschwindigkeit vorgenommen, bis die Betätigung abgebrochen wird. Die dritte vorgegebene Verstellgeschwindigkeit ist kleiner als die zweite aber nicht kleiner als die erste Verstellgeschwindigkeit. D. h. die dritte Verstellgeschwindigkeit kann auch gleich der ersten Verstellgeschwindigkeit sein. Bei Betätigung der Wähleinrichtung in die andere Richtung wird analog vorgegangen.

Bei der ersten Alternative erfolgt bei einem sog. Tippbefehl (kurze Betätigung der Wähleinrichtung in eine Richtung) immer eine Mindestverstellung, die im Sinne einer Schrittschaltung etwa einem Gangsprung entspricht. Diese Mindestverstellung ergibt bei einer üblichen Auslegung der Schrittschaltung einen Motordrehzahlsprung (beispielsweise bis ca. 1500 U/min). Dabei ist bei Bedarf eine reaktionsschnelle Veränderung der Drehzahl erreichbar. Jedoch ist in diesem Fall der Wunsch nach einer kleineren Drehzahländerung (z. B. zwischen 0 und 1500 U/min) nicht erfüllbar. Diese Möglichkeit wird durch die zweite Alternative geschaffen, in der eine vordefinierte Verstellung im Sinne eines Gangsprunges erst nach Erkennung eines kurzen Tippbefehls (Betätigungszeit der Wähleinrichtung in eine Richtung unterhalb einer vorgegebenen Zeitdauer) erfolgt.

Die Verstellgeschwindigkeit bei der kontinuierlichen Übersetzungsveränderung kann vorzugsweise von der Betätigungsdauer oder dem Betätigungsdruck abhängig gemacht werden. Dies hat den Vorteil, daß bei kleineren Verstellungen eine gute Dosierung möglich ist, bei größeren Verstelloperationen aber eine nicht zu lange Wartezeit in Kauf genommen werden muß.

Besonders vorteilhaft ist es, wenn in einer oder in beiden Richtungen der Betätigungsmöglichkeit des Bedienelements der Wähleinrichtung eine Sonderfunktion in der Weise realisiert ist, daß ein automatisches Fahrprogramm bzw. eine automatische Fahrstrategie aktiv wird, wenn die Wähleinrichtung über das erforderliche Maß hinaus betätigt wird. Ein solches Maß können zwei aufeinanderfolgende Tippbefehle innerhalb eines vordefinierten Zeitfensters oder ein Überdrücken eines Widerstandes - ähnlich einer Kick-Down-Betätigung- erfolgen. Bei einer entsprechenden Betätigung des Wählhebels in Richtung der längeren Übersetzung könnte beispielsweise eine automatische Fahrstrategie aktiviert werden, die eine kompromißlose, maximale Ökonomie zum Ziel hat, also ein Fahren im Bereich des Verbrauchsminimums.

Die Rückkehr zum normalen manuellen Fahrbetrieb, sozusagen zur Basisfunktion, kann über eine kurze Betätigung der Wähleinrichtung in die entgegengesetzte Richtung erfolgen. In diesem Fall würde die von dem vorangegangenen Automatikprogramm gewählte Übersetzung vorzugsweise beibehalten werden.

Bei einer entsprechenden Betätigung der Wähleinrichtung in Richtung zu einer kürzeren Übersetzung hin könnte als spezielle automatische Fahrstrategie ein Fahrprogramm gewählt werden, das eine maximale Fahrleistung erlaubt; d. h. das Übersetzungsverhältnis wird in jedem Fall so gewählt, daß für jeden Drosselklappenwinkel die jeweils maximale Motorleistung zur Verfügung steht. Hierbei können Komfortaspekte, insbesondere im Hinblick auf häufige Übersetzungsänderungen bei sich schnell ändernden Drosselklappen berücksichtigt werden. Auch bei diesem Fahrprogramm kann eine Rückkehr zum normalen manuellen Fahrbetrieb durch eine Betätigung der Wähleinrichtung in entgegengesetzter Richtung erfolgen.

In einer besonderen Ausführungsform der Erfindung ist es möglich, die Wähleinrichtung mit einem Wählhebel als Bedienelement auszustatten, der in einer manuellen Schaltgasse vor- und zurückbewegt werden kann. Vorzugsweise kann zusätzlich zu dieser manuellen Schaltgasse noch eine parallele Automatik-Schaltgasse vorgesehen sein, wobei die Automatik-Schaltgasse und die manuelle Schaltgasse durch eine querliegende Schaltgasse miteinander verbunden sind. In der Automatik-Schaltgasse können übliche Wählhebelpositionen, wie P (Parkstellung), R (Rückwärtsfahrt), N (Neutralposition) und D (normale Fahrstellung) vorgesehen sein. In der Fahrstellung D würde dann ein automatisch gesteuerter normaler Fahrbetrieb ausgeführt werden. Beim Übergang von einer Schaltgasse in die andere würde das jeweils andere Fahrprogramm aktiviert werden können.

Alternativ ist es auch vorstellbar, die Wähleinrichtung in Form eines Kippoder zweier Tastschalter zu verwirklichen, die vorzugsweise im Lenkrad angeordnet werden. Durch entsprechende Betätigung der Wahlschalter können die Getriebeübersetzungsveränderungen dann vorgenommen werden, ohne daß die Hände vom Lenkrad wegbewegt werden müssen.

Die vorliegende Erfindung wird anhand eines Ausführungsbeispieles und der beiliegenden Zeichnung näher erläutert. Die Zeichnungen zeigen in
- Fig. 1: ein schematisches Blockschaltbild einer elektrischen Steuerung für ein stufenloses Getriebe eines Kraftfahrzeugs und
- Fig. 2: ein Flußdiagramm für eine einfache Ausführungsform des erfindungsgemäßen Verfahrens nach der ersten Alternative.
- Fig. 3: ein Flußdiagramm für eine einfache Ausführungsform des erfindungsgemäßen Verfahrens nach der zweiten Alternative.

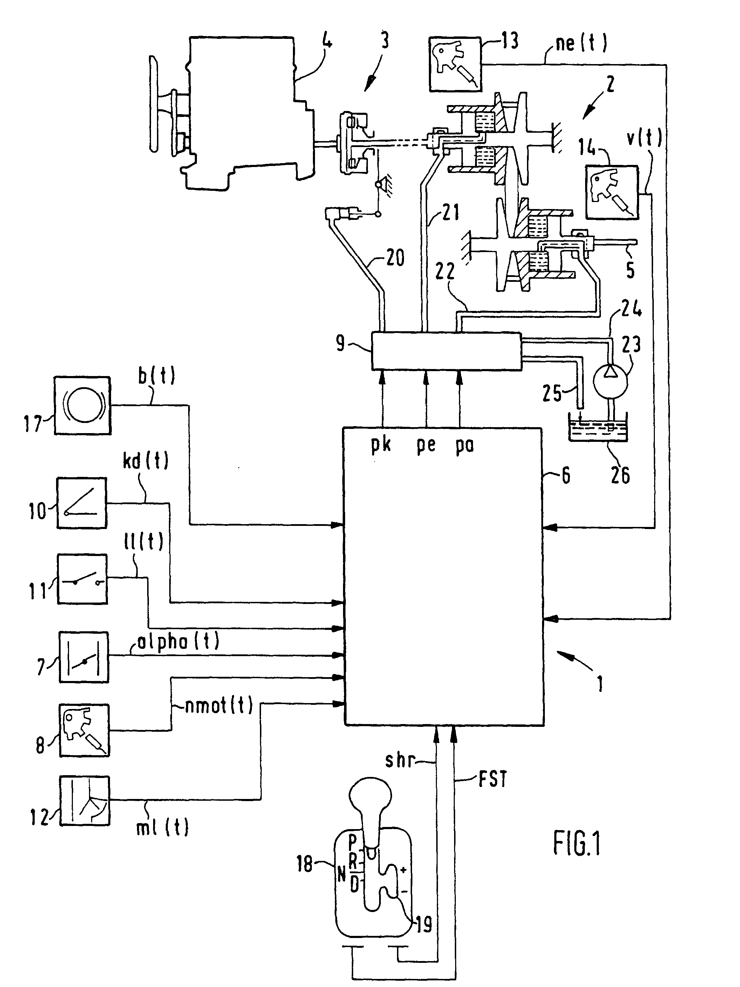

In Fig. 1 ist ein schematisches Blockdiagramm einer Steuervorrichtung 1 eines elektro-hydraulisch betätigten stufenlosen Getriebes 2 am Beispiel eines Umschlingungsgetriebes dargestellt. Natürlich können alternativ auch andere stufenlose Getriebe verwendet werden. Das stufenlose Getriebe 2 wird über eine steuerbare Anfahrkupplung 3 von einer Brennkraftmaschine 4 angetrieben. Eine Abtriebswelle 5 des stufenlosen Getriebes 2 ist mit einem nicht gezeigten Radantrieb eines Kraftfahrzeugs verbunden.

Mittels eines Wählhebels einer Wähleinrichtung 18 können Fahrbefehle an eine Steuereinheit 6 übermittelt werden.

In einer ersten Gasse, der Automatik-Schaltgasse sind Fahrstufen P (Parksperre), R (Rückwärtsgangstufe), N (Leergangstufe) und D (selbsttätige Einstellung des Übersetzungsverhältnisses) wählbar. Bei Wahl der Fahrstufe D wird ein Übersetzungsverhältnis automatisch aufgrund eines vorgegebenen Algorithmuses und unter Berücksichtigung von Fahrzeugbetriebsbedingungen eingestellt.

Als Fahrzeugbetriebsbedingungen werden vorliegend die von einem Drosselklappensensor 7 abgegebenen Drosselklappensignale α(t), von einem Motordrehzahlsensor 8 abgegebenen Motordrehzahlsignale nmot (t), von einem kick-down-Schalter 10 abgegebenen kick-down-Signale kd (t), von einem Leerlaufschalter 11 abgegebenen Leerlaufsignale II (t), von einem Luftmassensensor 12 abgegebenen Luftmassensignale ml (t), einem Getriebeeingangsdrehzahlsensor 13 abgegebenen Getriebeeingangsdrehzahlsignale ne (t), einem Fahrgeschwindigkeitssensor 14 abgegebenen Fahrgeschwindigkeitssignale v(t) und einem Bremssignalgeber 17 abgegebenen Bremssignale b(t) berücksichtigt. Der Wählhebel der Wähleinrichtung 18 kann aus der Fahrstufe D in eine zweite Schaltgasse 19, eine manuelle Schaltgasse, bewegt werden, in der der Wählhebel als Kippschalter arbeitet und der Fahrzeugbediener die Übersetzung des Getriebes manuell einstellen kann. Der Wählhebel besitzt eine mittige Neutralposition, aus der er nach vorn (+) und zurück (-) zur Abgabe von Signalen bewegt werden kann. Beim Loslassen kehrt er selbständig in die Neutralposition zurück. Die Wähleinrichtung 18 gibt somit ein Fahrstufensignal FST und ein Schaltanforderungssignal shr ab. Hierbei steht "Hochschalten" oder "Verringern der Übersetzung" für eine Übersetzungsänderung, die bei gleichbleibender Eingangsdrehzahl die Ausgangsdrehzahl des Getriebes erhöht. Umgekehrt stehen die Begriffe "Rückschalten" und "Erhöhen der Übersetzung" für eine Übersetzungsänderung im Sinne einer Verringerung der Ausgangsdrehzahl des Getriebes bei gleichbleibender Eingangsdrehzahl.

In Abhängigkeit von den genannten Größen steuert das Steuergerät 6 über einen Signalausgang pk und einen Ventilblock 9 den Hydraulikdruck in einer Anfahrkupplung 3 sowie über Signalausgänge pe und pa das Übersetzungsverhältnis ue zwischen der Getriebeeingangsdrehzahl ne(t) und der Getriebeausgangsdrehzahl (Fahrgeschwindigkeit) v(t). Der Hydraulikblock 9 verbindet hierzu entsprechende Steuerleitungen 20, 21 und 22 der Anfahrkupplung 3 und des stufenlosen Getriebes 2 mit einer an einer Pumpe 23 angeschlossenen Druckleitung 24 oder ein Rücklaufleitung 25 zu einem Vorratsbehälter 26 für Hydraulikflüssigkeit.

Das Schaltanforderungssignal enthält also von einem nicht dargestellten Sensor in der Wähleinheit 18 eine Information, ob der Wählhebel in einer normalen Betätigungsart nach vorne oder nach hinten betätigt worden ist. Ferner gibt der Sensor auch eine Information darüber ab, ob der Wählhebel über einen Widerstand hinweg in forcierter Weise betätigt worden ist. In diesem Fall wird ein entsprechendes Signal an die Steuergerät 6 abgegeben.

Alternativ hierzu könnte das Steuergerät 6 auch feststellen, ob der Wählhebel innerhalb eines bestimmten Zeitraums zweimal in die gleiche Richtung betätigt worden ist.

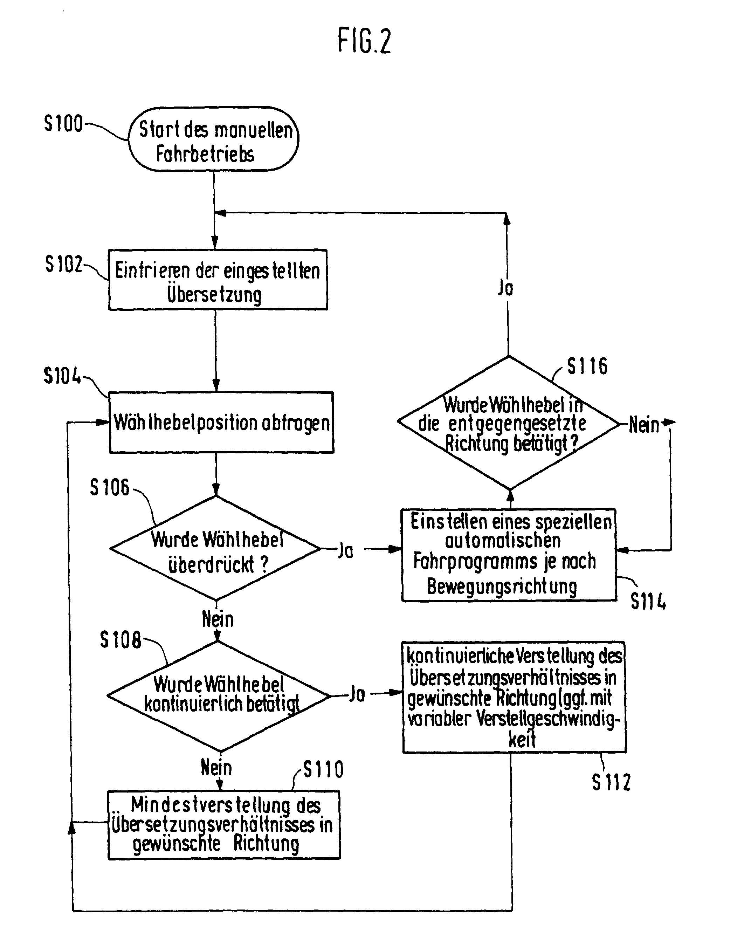

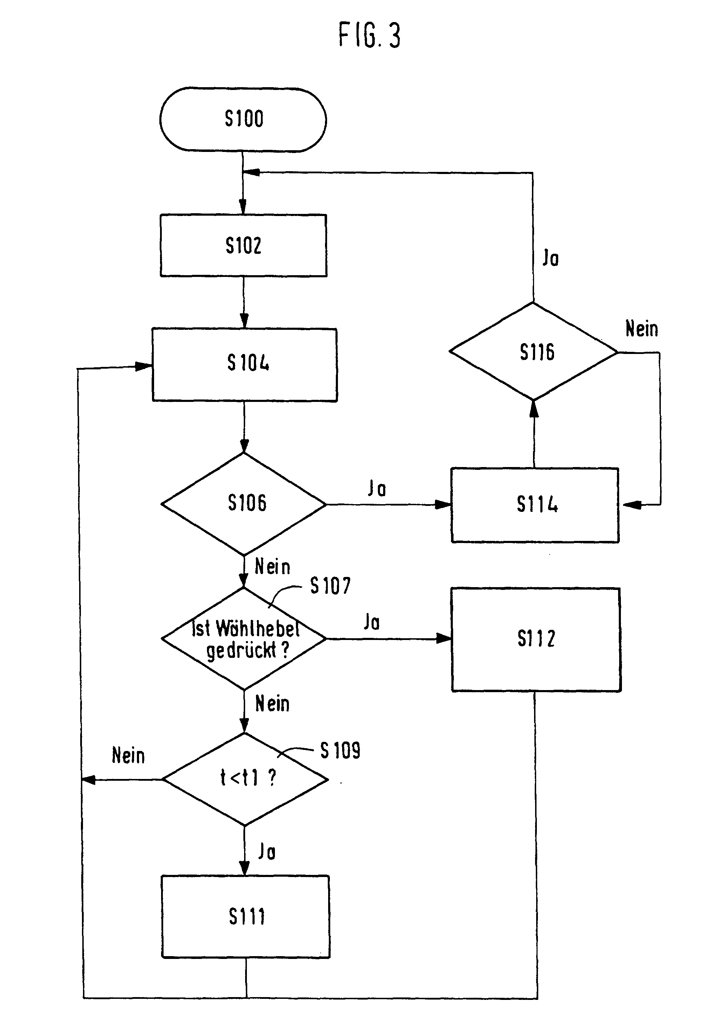

Entsprechend des Schaltanforderungssignals shr stellt die Steuereinheit 6 ein Übersetzungsverhältnis an der Getriebeeinheit gemäß dem Ablaufdiagramm in Fig. 2 oder Fig. 3 ein.

Der Start des manuellen Fahrbetriebs S100 wird dadurch herbeigeführt, daß der Wählhebel aus der Automatikschaltgasse in die manuelle Schaltgasse verschoben wird. Hierbei wird zunächst das eingestellte Übersetzungsverhältnis eingefroren, d. h. beibehalten. In einem nächsten Schritt S104 wird die Wählhebelposition abgefragt, befindet sich der Wählhebel der Wähleinrichtung 18 weiter in seiner neutralen Stellung, erfolgt keine Änderung des Übersetzungsverhältnisses. Wird jedoch eine Betätigung des Wählhebels detektiert, so wird zunächst in Schritt S106 geprüft, ob der Wählhebel über einen Widerstand überdrückt wurde (ähnlich wie beim Kick-Down-Schalter).

Ist dies nicht der Fall, so wird gemäß Fig. 2 in Schritt S108 abgefragt, ob der Wählhebel erstmalig oder kontinuierlich betätigt wurde. Wurde der Wählhebel nicht kontinuierlich betätigt, sondern erstmalig, so wird in Schritt S110 am Getriebe 2 eine Mindestverstellung des Übersetzungsverhältnisses in die gewünschte Richtung eingestellt, d. h. bei einer Betätigung des Wählhebels in die +-Richtung in Fig. 1 wird eine Mindestverstellung zu einer längeren Übersetzung hin vorgenommen. Eine solche Mindestverstellung erfolgt für jeden neuen Tippbefehl. Die Mindestverstellung kann fest vorgegeben oder aber von den Fahrbetriebsparametern abhängig gemacht werden.

Alternativ wird gemäß Fig. 3 in Schritt S107 abgefragt, ob der Wählhebel betätigt ist. Wenn der Wählhebel betätigt ist, wird in Schritt S112 eine kontinuierliche Verstellung des Übersetzungsverhältnisses mit einer ersten langsamen Verstellgeschwindigkeit vorgenommen. Ist der Wählhebel nicht bzw. nicht mehr betätigt wird im Schritt S109 abgefragt, ob der Wählhebel zuvor für eine Zeit t betätigt wurde, die kürzer als eine vorgegebene Zeitdauer t1 war. Wenn dieser Fall vorliegt, wird in Schritt S111 das Übersetzungverhältnis bis zu einem vordefinierten Betrag, z. B. gemäß Schritt S110 in Fig. 2 in Form der Mindestverstellung, mit einer gegenüber der ersten Verstellgeschwindigkeit erhöhten zweiten Verstellgeschwindigkeit vorgenommen. Wird in Schritt S109 festgestellt, daß die Betätigungszeit nicht kleiner als die vorgegebene Zeitdauer (11) war, wird die Verstellung abgebrochen. Im vorliegenden Ausführungsbeispiel ist zur Vereinfachung des Verfahrens die erste Verstellgeschwindigkeit gleich der dritten Verstellgeschwindigkeit, die im Block S112 immer dann gewählt wird, wenn der Wählhebel betätigt ist.

Anschließend wird zurückverzweigt und die Wählhebelposition wieder abgefragt.

Wird in Schritt S 108 (Fig. 2) oder in Schritt S107 (Fig. 3) eine kontinuierliche Wählhebelverstellung in +-Richtung festgestellt, so erfolgt eine kontinuierliche Übersetzungsverstellung zu einer längeren Übersetzung hin. Dabei kann die Verstellgeschwindigkeit VG der Verstellung von der Betätigungsdauer (VG=f(t)) abhängig sein. Alternativ kann die Verstellgeschwindigkeit auch vom Betätigungsdruck abhängig (VG=f(p)) gemacht werden.

Bei Nichtbetätigung der Wählhebelposition bzw. Rückkehr des Wählhebels in seine Neutralposition wird die gewählte Übersetzung beibehalten.

Analog wird bei einer Bewegung des Wählhebels in - Richtung vorgegangen, d. h. es erfolgt nach Fig. 2 pro Tippbefehl eine Mindestverstellung des Übersetzungsverhältnisses zu kürzeren Übersetzungen hin. Bei einer kontinuierlichen Betätigung findet eine kontinuierliche Übersetzungsverstellung zu kürzeren Übersetzungen statt, wobei die Verstellgeschwindigkeit wiederum von der Betätigungsdauer abhängig ist (VG = f(t)).

Je nach Betätigung des Wählhebels der Wähleinrichtung 18 erfolgt somit eine manuelle und bei längerer Wählhebelbetätigung kontinuierliche Übersetzungsverstellung des Übersetzungsverhältnisses des automatischen Getriebes, so daß für jede Fahrsituation bzw. für jeden Fahrwunsch eine passende Übersetzung innerhalb des Gesamtübersetzungsbereichs des Getriebes per Hand explizit ausgewählt werden kann. So ist es dem Fahrer z.B. möglich, die Vorwärtsdynamik seines Fahrzeugs bei konstanter Last mit der Getriebeübersetzung zu steuern.

Als zusätzliche Funktionalität erfolgt eine Einstellung eines speziellen Automatikfahrprogramms dann, wenn der Wählhebel in eine bestimmte Richtung in besonderer Weise betätigt wird. Im vorliegenden Fall erfolgt diese besondere Betätigung durch eine Überdrückung eines Widerstandes. Bei einer entsprechenden Betätigung in +-Richtung (++ Funktion) wird eine automatische Fahrstrategie aktiviert, die ein kompromißloses Fahren im Bereich maximaler Ökonomie, also eines Verbrauchsminimums zum Ziel hat.

Eine Rückkehr zum normalen manuellen Betrieb erfolgt durch eine einmalige Betätigung des Wählhebels in - Richtung, wobei die zuletzt eingestellte Ausgangsübersetzung beibehalten wird.

Analog wird bei einem Überdrücken des Wählhebels in - Richtung (-- Funktion) ein automatisches Fahrprogramm aktiviert, welches eine maximale Fahrleistung gewährleistet. Dabei wird ein Übersetzungsverhältnis immer so gewählt, daß für jeden Drosselklappenwinkel die jeweils maximale Motorleistung zur Verfügung steht. Dabei können Komfortaspekte insbesondere im Hinblick auf häufige Übersetzungsänderungen bei sich schnell ändernden Drosselklappen berücksichtigt werden. Auch hierbei ist eine Rückkehr zum normalen manuellen Betrieb durch einmalige Betätigung des Wählhebels in + Richtung möglich.

Natürlich können alternativ auch andere Fahrprogramme als die vorbeschriebenen Fahrprogramme ausgewählt werden.

Ferner ist es natürlich alternativ möglich, anstatt des in der manuellen Gasse zu bewegenden Wählhebels einen Kippschalter oder eine Einheit aus zwei Tasten bestehend zu verwenden, mit der der Fahrtwunsch an die Steuereinheit 6 übermittelt werden kann. Ein solcher Kippschalter bzw. eine solche Tasteinheit kann vorteilhaft am Lenkrad angeordnet sein. In diesem Fall muß der Fahrzeugbediener bei einer manuellen Änderung des Übersetzungsverhältnisses seine Hand nicht vom Lenkrad nehmen. Dies ist gerade im vorliegenden Fall von Vorteil, da eine manuelle Getriebeübersetzungsverstellung bei einer besonders sportlichen Fahrweise bevorzugt wird, wo beide Hände des Fahrzeugbedieners am Lenkrad verbleiben sollten.

Natürlich kann die vorliegende Erfindung auch noch mit anderen Funktionalitäten kombiniert werden. Beispielsweise kann die Steuereinheit 6 so ausgebildet sein, daß eine manuell vorgegebene Übersetzungsänderung dann nicht umgesetzt wird, wenn die Fahrbedingungen oder die Motorbetriebsdaten dies aus Sicherheitsgründen nicht erlauben. Ferner können fahrdynamische Stabilitätskriterien bei der Wahl der Getriebeübersetzung eine Rolle spielen.

Mit der vorliegenden Erfindung ist es möglich, dem Fahrer für jede Fahrsituation eine passende Übersetzung innerhalb des Gesamtübersetzungsbereiches manuell zur Verfügung zu stellen. Die Erfindung gewährleistet auch eine lange Lebensdauer des Getriebes durch Entfall bevorzugter Übersetzungsverhältnisse.

### Bezugszeichenliste

- 1: Steuervorrichtung
- 2: stufenloses Getriebe
- 3: Anfahrkupplung
- 4: Brennkraftmaschine
- 5: Abtriebswelle
- 6: Steuergerät
- 7: Drosselklappensensor
- 8: Motordrehzahlsensor
- 9: Hydraulik-Einrichtung
- 10: Kick-Down-Schalter
- 11: Leertaufschalter
- 12: Luftmassensensor
- 13: Getriebeeingangsdrehzahlsensor
- 14: Fahrgeschwindigkeitssensor
- 15: Referenzgeschwindigkeitsgeber
- 18: Wähleinrichtung
- 19: manuelle Schaltgasse
- 20, 21, 22: Steuerleitungen
- 23: Pumpe
- 24: Druckleitung
- 25: Rücklaufleitung
- 26: Vorratsbehälter

- b(t): Bremssignal
- kd(t): Kick-Down-Signal
- II(t): Leerlaufsignal
- alpha(t): Drosselklappensignal
- nmot(t): Motordrehzahlsignal
- ml(t): Luftmassensignal
- ne(t): Getriebeeingangsdrehzahlsignal
- v(t): Fahrgeschwindigkeitssignal
- pk: Signalausgang für Anfahrkupplung
- pa, pe: Signalausgänge für Übersetzung
- shr: Schaltanforderungssignal
- FST: Fahrstufensignal
- P, R, N, D: Wählhebelpositionen

- S100 - S116: Schritte im Ablaufdiagramm

## Patentansprüche

1. Steuerverfahren für ein stufenloses Getriebe eines mit einer Brennkraftmaschine angetriebenen Fahrzeugs, bei dem eine mit einer Wähleinrichtung verbundene Steuereinheit das Steuerverfahren in zumindest einer Betriebsart ausführt, bei der das Übersetzungsverhältnis des Getriebes durch manuelle Betätigung der Wähleinrichtung in eine von zwei möglichen Betätigungsrichtungen vom Fahrzeugbediener direkt beeinflusst wird, **dadurch gekennzeichnet, dass** bei Betätigung der Wähleinrichtung (**18**) in eine Richtung das Übersetzungsverhältnis ab Beginn der Betätigung der Wähleinrichtung (**18**) um eine Mindestverstellung zu einer längeren Übersetzung hin verstellt wird, die im Sinne einer Schrittschaltung etwa einem Gangsprung entspricht, und bei einer fortdauernden Betätigung der Wähleinrichtung (**18**) eine kontinuierliche Verstellung in Richtung einer längeren Übersetzung vorgenommen wird, und
dass bei Betätigung der Wähleinrichtung (**18**) in die andere Richtung das Übersetzungsverhältnis zunächst um eine Mindestverstellung zu einer kürzeren Übersetzung hin verstellt wird und bei einer fortdauernden Betätigung der Wähleinrichtung (**18**) in diese Richtung eine kontinuierliche Verstellung in Richtung einer kürzeren Übersetzung vorgenommen wird.

2. Steuerverfahren für ein stufenloses Getriebe eines mit einer Brennkraftmaschine angetriebenen Fahrzeugs, bei dem eine mit einer Wähleinrichtung verbundene Steuereinheit das Steuerverfahren in zumindest einer Betriebsart ausführt, bei der das Übersetzungsverhältnis des Getriebes durch manuelle Betätigung der Wähleinrichtung in eine von zwei möglichen Bewegungsrichtungen vom Fahrzeugbediener direkt beeinflusst wird, **dadurch gekennzeichnet, dass** ab Beginn der Betätigung der Wähleinrichtung (**18**) in eine Richtung das Übersetzungsverhältnis kontinuierlich mit einer ersten vorgegebenen Verstellgeschwindigkeit in Richtung einer längeren Übersetzung hin verstellt wird,
dass bei einem Abbruch der Betätigung der Wähleinrichtung vor Erreichen einer vorgegebenen Zeitdauer (t1) die Verstellung des Übersetzungsverhältnisses bis zu einem vordefinierten Betrag mit einer gegenüber der ersten vorgegebenen Verstellgeschwindigkeit erhöhten zweiten Verstellgeschwindigkeit vorgenommen wird, und
dass bei einer über die vorgegebene Zeitdauer hinaus fortdauernden Betätigung der Wähleinrichtung (**18**) die kontinuierliche Verstellung in Richtung einer längeren Übersetzung mit einer dritten vorgegebenen Verstellgeschwindigkeit, die kleiner als die zweite aber nicht kleiner als die erste Verstellgeschwindigkeit ist, vorgenommen wird, bis die Betätigung abgebrochen wird, und
dass bei Betätigung der Wähleinrichtung (**18**) in die andere Richtung die Verstellung in Richtung eines kürzeren Übersetzungsverhältnis analog vorgenommen wird.

3. Steuerverfahren nach Anspruch 1 oder 2, **dadurch gekennzeichnet, dass** die Verstellgeschwindigkeit (VG) von der Betätigungsdauer (VG = f(t)) oder dem Betätigungsdruck (VG = f(p)) auf die Wähleinrichtung (**18**) abhängig gemacht wird.

4. Steuerverfahren nach einem der Ansprüche 1 bis 3, **dadurch gekennzeichnet, dass** bei zwei in einem definierten Zeitfenster aufeinanderfolgenden Betätigungen der Wähleinrichtung (**18**) in eine Richtung oder bei Überdrücken eines Widerstandes in dieser Richtung ein besonderes, automatisches Fahrprogramm ausgewählt wird, bei der die Steuereinheit (**6**) aufgrund erfasster Betriebsgrößen selbständig eine Übersetzung des Getriebes wählt, und dieses Fahrprogramm wieder beendet wird, wenn die Wähleinrichtung (**18**) wieder in die andere Richtung betätigt wird.

5. Steuerverfahren nach Anspruch 4, **dadurch gekennzeichnet, dass** bei Beendigung des automatischen Fahrprogramms die zuletzt eingestellte Übersetzung beibehalten wird.

6. Steuerverfahren nach Anspruch 4 oder 5, **dadurch gekennzeichnet, dass** bei dem automatischen Fahrprogramm ein Fahrprogramm für maximale Ökonomie und / oder maximale Fahrleistung eingestellt wird.

7. Steuerverfahren nach einem der vorhergehenden Ansprüche, **dadurch gekennzeichnet, dass** zusätzlich eine zweite Betriebsart vorgesehen ist, bei der durch die Wähleinrichtung (**18**) eine Fahrstufe ausgewählt wird, bei der die Steuereinheit aus Signalen der Wähleinrichtung (P, R, D) und von Fahrzeugbetriebsgrößen wie Drosselklappenwinkel, Fahrgeschwindigkeit und Motordrehzahl selbständig eine Übersetzung des Getriebes wählt und einstellt.

8. Steuerverfahren nach Anspruch 7, **dadurch gekennzeichnet, dass** die Wähleinrichtung (**18**) in zwei vorzugsweise parallel zueinander angeordneten Schaltgassen bewegt werden kann, wobei die erste Schaltgasse der ersten Betriebsart zugeordnet ist, und die zweite Schaltgasse der zweiten Betriebsart zugeordnet ist, und beide Schaltgassen durch eine Verbindungsgasse miteinander verbunden sind und bei Betätigen der Wähleinrichtung (**18**) von einer in die andere Schaltgasse die jeweils zugeordnete Betriebsart eingestellt wird.

9. Steuervorrichtung für ein stufenloses Getriebe eines mit einer Brennkraftmaschine angetriebenen Fahrzeuges, mit einer in zumindest zwei Richtungen betätigbaren Wähleinrichtung, die mit einer Steuereinheit verbunden ist, welche derart ausgebildet ist, dass in einer ersten Betriebsart bei der manuellen Betätigung der Wähleinrichtung die Übersetzung des Getriebes direkt beeinflussbar ist, **dadurch gekennzeichnet, dass** die Steuereinheit (**6**) derart ausgebildet ist, dass bei Betätigung der Wähleinrichtung (**18**) in eine Richtung das Übersetzungsverhältnis ab Beginn der Betätigung der Wähleinrichtung (**18**) um eine Mindestverstellung zu einer längeren Übersetzung hin verstellt wird, und bei einer fortdauernden Betätigung der Wähleinrichtung (**18**) eine kontinuierliche Verstellung in Richtung einer längeren Übersetzung vorgenommen wird, und
dass bei Betätigung der Wähleinrichtung (**18**) in die andere Richtung das Übersetzungsverhältnis zunächst um eine Mindestverstellung zu einer kürzeren Übersetzung hin verstellt wird, die im Sinne einer Schrittschaltung etwa einem Gangsprung entspricht, und bei fortdauernder Betätigung der Wähleinrichtung (**18**) in dieser Richtung eine kontinuierliche Verstellung in Richtung einer kürzeren Übersetzung vorgenommen wird.

10. Steuervorrichtung für ein stufenloses Getriebe eines mit einer Brennkraftmaschine angetriebenen Fahrzeugs, mit einer in zumindest zwei Richtungen betätigbaren Wähleinrichtung, die mit einer Steuereinheit verbunden ist, welche derart ausgebildet ist, dass in einer ersten Betriebsart bei der manuellen Betätigung der Wähleinrichtung die Übersetzung des Getriebes direkt beeinflussbar ist, **dadurch gekennzeichnet, dass** die Steuereinheit (**6**) derart ausgebildet ist, um ab Beginn der Betätigung der Wähleinrichtung (**18**) in eine Richtung das Übersetzungsverhältnis kontinuierlich mit einer ersten vorgegebenen Verstellgeschwindigkeit in Richtung einer längeren Übersetzung hin zu verstellen,
um bei einem Abbruch der Betätigung der Wähleinrichtung vor Erreichen einer vorgegebenen Zeitdauer die Verstellung des Übersetzungsverhältnisses bis zu einem vordefinierten Betrag mit einer gegenüber der ersten vorgegebenen Verstellgeschwindigkeit erhöhten zweiten Verstellgeschwindigkeit vorzunehmen,
um bei einer über die vorgegebene Zeitdauer (t1) hinaus fortdauernden Betätigung der Wähleinrichtung (**18**) die kontinuierliche Verstellung in Richtung einer längeren Übersetzung mit einer dritten vorgegebenen Verstellgeschwindigkeit, die kleiner als die zweite aber nicht kleiner als die erste Verstellgeschwindigkeit ist, vorzunehmen, bis die Betätigung abgebrochen wird, und um bei Betätigung der Wähleinrichtung (**18**) in die andere Richtung die Verstellung in Richtung eines kürzeren Übersetzungsverhältnis analog vorzunehmen.

11. Steuervorrichtung nach Anspruch 9 oder 10, **dadurch gekennzeichnet, dass** die Stelleinheit (**6**) derart ausgebildet ist, dass die Verstellgeschwindigkeit (VG) in Abhängigkeit von der Betätigungsdauer (VG = f(t)) oder dem Betätigungsdruck (VG = f(p)) auf die Wähleinrichtung (**18**) auswählbar ist.

12. Steuervorrichtung nach einem der Ansprüche 9 bis 11, **dadurch gekennzeichnet, dass** die Steuereinheit (**6**) derart ausgebildet ist, um bei zwei in einem definierten Zeitfenster aufeinanderfolgenden Betätigungen der Wähleinrichtung (**18**) in eine Richtung oder bei Überdrücken eines Widerstandes in diese Richtung und Empfang eines entsprechenden Signals ein besonderes automatisches Fahrprogramm auszuwählen, bei dem eine Übersetzung des Getriebes aufgrund erfasster Betriebsgrößen selbständig gewählt wird, und um dieses Fahrprogramm wieder zu beenden, wenn die Wähleinrichtung (**18**) erstmals wieder in die andere Richtung bewegt wird.

13. Steuervorrichtung nach Anspruch 12, **dadurch gekennzeichnet, dass** Steuereinheit (**6**) derart ausgebildet ist, um bei Beendigung des automatischen Fahrprogramms die zuletzt eingestellte Übersetzung beizubehalten.

14. Steuervorrichtung nach Anspruch 12 oder 13, **dadurch gekennzeichnet, dass** die Steuereinheit (**6**) derart ausgebildet ist, um bei dem automatischen Fahrprogramm ein Fahrprogramm für maximale Ökonomie und / oder maximale Fahrleistung einzustellen.

15. Steuervorrichtung nach einem der vorhergehenden Ansprüche, **dadurch gekennzeichnet, dass** die Steuereinheit (**6**) derart ausgebildet ist, um zusätzlich eine zweite Betriebsart zu ermöglichen, bei der die Steuereinheit (**6**) aus Signalen der eine Fahrstufe bestimmenden Wähleinrichtung (**18**) oder eines anderen Schalters und weiterer Fahrzeugbetriebsgrößen wie Drosselklappenwinkel, Fahrgeschwindigkeit und Motordrehzahl selbständig eine Übersetzung des Getriebes wählt und einstellt.

16. Steuervorrichtung nach Anspruch 15, **dadurch gekennzeichnet, dass** die Wähleinrichtung (**18**) einen Wählhebel aufweist, der in zwei vorzugsweise parallel zueinander angeordneten Schaltgassen bewegbar ist, wobei die erste Schaltgasse der ersten Betriebsart zugeordnet ist, und die zweite Schaltgasse der zweiten Betriebsart zugeordnet ist, und beide Schaltgassen durch eine Verbindungsgasse verbunden sind und bei Betätigen des Wählhebels von einer in die andere Schaltgasse die jeweils zugeordnete Betriebsart eingestellt wird.

17. Steuervorrichtung nach einem der Ansprüche 9 bis 14, **dadurch gekennzeichnet, dass** die Wähleinrichtung (**18**) eine Tastenbedieneinheit, vorzugsweise am Lenkrad des Fahrzeugs, umfasst.

## Claims

1. A control method for an infinitely variable gearbox of a vehicle driven by internal combustion engine in which a controlled unit associated with a selection mechanism carries out the control method in at least one mode of operation in which the transmission ratio of the gearbox is directly controlled by manual operation of the selector device in one of two possible actuating directions by the driver, **characterized in that** with the actuation of the selector mechanism (**18**) in one direction, the transmission ratio is adjusted by a minimum adjustment towards a higher gearing, which corresponds somewhat to a single gear change in a step-wise changing gearbox and with a continuing actuation of the selector mechanism (18) undertakes a continual adjustment towards a higher gearing, and
that the operation of the selector mechanism (18) in the other direction first adjusts the transmission ratio by a minimum adjustment to a lower gearing and with a continuing actuation of the selector mechanism (18) in this direction undertakes a continuous adjustment towards a lower gearing.

2. A control method for an infinitely variable gearbox of a vehicle driven by internal combustion engine in which a controlled unit associated with a selector device performs the method in at least one mode of operation in which the transmission ratio of the gearbox is directly controlled by manual actuation of the selector device in one of two possible directions of movement by the driver, **characterized in that** from the start of the actuation of the selector device (18) in one direction, the transmission ratio is continuously adjusted in the direction of a higher gearing at a first prescribed speed of adjustment,
that if the actuation of the selector device is interrupted before a prescribed period (t1) has elapsed, the adjustment of the transmission ratio up to a predefined amount is continued at an increased second adjustment speed, and
that in the case of an operation of the selector device (18) beyond the prescribed period, the continuous adjustment in the direction of a higher gear continues at a third prescribed speed of adjustment which is less than the second but not less than the first adjustment speed until the actuation is broken off and
that the actuation of the selector device (18) in the other direction causes the adjustment in the direction of a lower gearing ratio in a similar manner.

3. A control method according to claim 1 or claim 2, **characterized in that** the speed of adjustment (VG) can be made dependent upon the duration of activation (VG =f(t)) or the actuation pressure (VG = f(p)) on the selector device (18).

4. A control method according to one of the claims 1, 2, 3 **characterized in that** with two sequential actuations of the selector device (18) in one direction in a defined time window in one direction or on over pressure against a resistance in this direction an especial automatic drive program is selected according to which the control unit (6) automatically selects a transmission of the gearbox based on captured operating values and this drive programme is again ended when the selector device (18) is operated again into the other direction.

5. A control method according to claim 4, **characterized in that,** on the ending of the automatic drive programme, the last transmission installed in retained.

6. A control method according to claim 4 or claim 5, **characterized in that** with the automatic driving programme, a driving programme for maximum economy and/or maximum driving performance is installed.

7. A control method according to one of the foregoing claims, **characterized in that** in addition a second operating mode is provided, in which a driving stage is selected by the selector device (18) in which the control unit automatically selects and installs a translation from the gearbox using signals from the selector device (P, R, D) and from driving values such as the throttle flap angle, the speed of travel and the engine revolutions.

8. A control method according to claim 7 **characterized in that** the control device (18) can be moved in two gates preferably arranged parallel to each other whereby the first gate is allocated to the first operating mode and the second gate is allocated to the second operating mode and both gates are joined together by a linking gate and on operation of the selector mechanism (18) from one into the other gate, the associated operating mode is installed.

9. A control device for an infinitely variable gearbox of a vehicle driven by an internal combustion engine with a selector device which can be actuated in at least two directions, which is joined to a control unit which is constructed in such a manner that in a first operating mode with the manual activation of the selector device, the transmission of the gearbox can be directly controlled. **characterized in that** the control unit (6) is constructed in such a manner that with the operation of the selector device (18) in one direction the transmission ratio is adjusted towards a higher gearing by a minimum adjustment and if the selector mechanism (18) is actuated continuously a continuous adjustment in the direction of a higher gearing is undertaken and that with the operation of the selector device (18) in the other direction, the transmission ratio is at first adjusted by a minimum adjustment towards a lower gearing which corresponds somewhat to a single gear shift in the sense of a step-wise switching and with a continuous actuation of the selector mechanism (18) in this direction a continuous adjustment in the direction of a lower gearing is undertaken.

10. A control device for an infinitely variable gearbox of a vehicle driven by an internal combustion engine with a selector mechanism which can be actuated in at least two directions which is joined to a control unit which is constructed in such a manner that in a first mode of operation with the manual actuation of the selector device the transmission of the gearbox can be directly controlled, **characterized in that** the control unit (6) is so constructed so as to adjust the transmission ratio continuously at a first prescribed speed of adjustment in the direction of a higher gearing from the beginning of the actuation of the selector mechanism (18), and so as with an interruption to the actuation of the selector mechanism before the expiry of a prescribed time period, with the adjustment of the transmission ratio up to a predefined amount is undertaken at a second speed of adjustment which is increased from the first prescribed speed of adjustment, so as with an operation of the selector mechanism (18) continuing beyond the prescribed period, (t1), the continuous adjustment towards a higher gearing is undertaken at a third prescribed speed of adjustment which is smaller than the second but not smaller than the first speed of adjustment until the operation is interrupted and with the actuation of the selector mechanism (18) in the other direction the adjustment in the direction of a lower gearing ratio is undertaken in a similar manner.

11. A control arrangement according to claim 9 or claim 10 **characterized in that** the control'unit (6) is so constructed that the speed of adjustment (VG) can be selected dependent upon the duration of the actuation (VG = f(t)) or the pressure of actuation on the selector device (18) (VG - f(p)).

12. A control device according to one of the claims 9 to 11 **characterized in that** the control unit (6) is so constructed so that with two sequential actuations of the selector device (18) in one direction or with over pressing against a resistance in this direction and the receipt of a corresponding signal an especial automatic driving programme is selected in which the transmission of the gearbox is automatically selected based on captured operating values and in order again to stop this driving program if the selector device (18) is for the first time again moved in the opposite direction.

13. A control device according to claim 12, **characterized in that** the control unit (6) is constructed in such a manner that one ending the automatic driving program, the last transmission ratio installed is retained.

14. A control device according to claim 12 or claim 13, **characterized in that** the control unit (6) is constructed in such a manner that for the automatic driving program, a driving program for maximum economy and/or a maximum driving performance is installed.

15. A control device according to one of the foregoing claims, **characterized in that** the control unit (6) is constructed such that in addition a second operating mode is facilitated, in which the control unit (6) automatically selects and installs a transmission ratio of the gearbox based on signals from another gearbox and further vehicle operating values such as throttle flap angle, speed of travel and engine revolutions.

16. A control device according to claim 15 **characterized in that** the selector mechanism (18) has a selector lever which can be moved in two gearbox gates preferably arranged parallel to each other, whereby the first gate is allocated to the first operating mode and of the second gate to the second operating mode, and both switch gates are joined together by a linking gate and on activation of the selector lever from one into the other switching gate, the operating mode associated with it is installed.

17. A control device according to one of the claims 9 to 14, **characterized in that** the selector device (18) includes a push button operating unit preferably on the steering wheel of the vehicle.

## Revendications

1. Procédé de commande d'une transmission à réglage continu dans un moteur à combustion interne d'un véhicule selon lequel une unité de commande combinée à une installation de sélection effectue la procédure de commande selon au moins un mode de fonctionnement, le rapport de démultiplication de la transmission étant influencé directement par actionnement manuel de l'installation de sélection dans l'une des deux directions d'actionnement possibles par le conducteur,
**caractérisé en ce que**
en actionnant l'installation de sélection (18) dans une direction, le rapport de démultiplication est réglé à partir du début de l'actionnement de l'installation de sélection (18), d'au moins un réglage minimum vers un rapport plus long correspondant sensiblement à un changement de rapport de vitesse dans le cas d'une boîte de vitesses étagée, et en cas d'actionnement continu de l'installation de sélection (18) il y a réglage continu en direction d'une démultiplication plus longue ; et
lors de l'actionnement de l'installation de sélection (18) dans l'autre direction, le rapport de démultiplication est tout d'abord réglé selon un réglage minimum vers un rapport plus court et en cas d'actionnement continu de l'installation de sélection (18) dans cette direction, il y a un réglage continu en direction d'un rapport plus court.

2. Procédé de commande d'une transmission à réglage continu d'un véhicule équipé d'un moteur à combustion interne selon lequel avec une unité de commande reliée à une installation de sélection, on exécute le procédé de commande selon au moins un mode de fonctionnement selon lequel on influence directement le rapport de démultiplication de la transmission par actionnement manuel de l'installation de sélection dans l'une des deux directions de mouvement possibles directement par le conducteur du véhicule,
**caractérisé en ce que**
à partir du début de l'actionnement de l'installation de sélection (18) dans une direction, on règle le rapport de démultiplication en continu selon une première vitesse de réglage prédéterminée en direction d'un rapport plus long ;
en cas d'arrêt de l'actionnement de l'installation de sélection avant d'atteindre la fin d'une durée prédéterminée (t1) on effectue le réglage du rapport de démultiplication jusqu'à une valeur prédéfinie avec une seconde vitesse de réglage plus élevée que la première vitesse de réglage ; et
pour un actionnement de l'installation de sélection (18) qui dure au-delà de la durée prédéterminée, on effectue le réglage continu en direction d'un rapport plus long avec une troisième vitesse de réglage prédéterminée, inférieure à la seconde vitesse mais non inférieure à la première vitesse de réglage, jusqu'à ce que l'actionnement soit interrompu ; et
lors de l'actionnement de l'installation de sélection (18) dans l'autre direction, le réglage se fait de façon analogue en direction d'un rapport de démultiplication plus court.

3. Procédé de commande selon la revendication 1 ou 2,
**caractérisé en ce que**
la vitesse de réglage (VG) dépend de la durée d'actionnement (VG = f(t)) ou de la pression d'actionnement (VG = f(p)) sur l'installation de sélection (18).

4. Procédé de commande selon l'une des revendications 1 à 3,
**caractérisé en ce que**
pour deux actionnements successifs de l'installation de sélection (18) dans une fenêtre de temps, définie, dans une direction ou en cas de passage d'une résistance dans cette direction, on sélectionne un programme de fonctionnement particulier, automatique pour lequel l'unité de commande (6) s'appuyant sur des paramètres de fonctionnement saisis, sélectionne automatiquement une démultiplication de la transmission et ce programme de fonctionnement de nouveau terminé lorsque l'installation de sélection (18) est de nouveau actionné dans l'autre direction.

5. Procédé de commande selon la revendication 4,
**caractérisé en ce que**
pour la fin du programme de fonctionnement automatique, on conserve le dernier rapport réglé.

6. Procédé de commande selon l'une des revendications 4 ou 5,
**caractérisé en ce que**
en cas de programme de déplacement automatique, on règle un programme de déplacement pour une économie maximale et/ou une puissance maximale.

7. Procédé de commande selon l'une des revendications précédentes,
**caractérisé en ce que**
en plus il est prévu un second mode de fonctionnement pour lequel, par l'installation de sélection (18), on sélectionne un étage de fonctionnement pour lequel l'unité de commande sélectionne parmi les signaux de l'installation de sélection (P, R, D) ou des paramètres du moteur tels que l'angle du volet d'étranglement, la vitesse de déplacement, le régime moteur, pour sélectionner automatiquement une démultiplication de la transmission et règle cette démultiplication.

8. Procédé de commande selon la revendication 7,
**caractérisé en ce que**
l'installation de sélection (18) peut être déplacée dans deux couloirs de commutation de préférence parallèles, le premier couloir de commutation étant associé au premier mode de fonctionnement et le second couloir de commutation au second mode de fonctionnement et les deux couloirs de commutation sont reliés par un couloir de liaison et lors de l'actionnement de l'installation de sélection (18) pour passer d'un couloir de commutation à l'autre, on règle le mode de fonctionnement respectif.

9. Dispositif de commande d'une transmission réglable en continu d'un véhicule équipé d'un moteur à combustion interne comportant une installation de sélection qui peut être actionnée dans au moins deux directions, en étant relié à une unité de commande réalisée pour que dans un premier mode de fonctionnement, en cas d'actionnement manuel de l'installation de sélection, la démultiplication de la transmission est influencée directement,
**caractérisé en ce que**
l'unité de commande (6) est réalisée de façon que pour l'actionnement de l'installation de sélection (18) dans une direction, le rapport de démultiplication est réglé à partir du début de l'actionnement de l'installation de sélection (18) d'un réglage minimum vers une démultiplication plus longue et en cas d'actionnement prolongé de l'installation de sélection (18) il y a un réglage continu en direction d'une démultiplication plus longue ; et
en cas d'actionnement de l'installation de sélection (18) dans l'autre direction, le rapport de démultiplication (18) est tout d'abord réglé d'un réglage minimum vers une démultiplication plus courte qui dans le sens d'une commutation de rapport correspond sensiblement à un passage de rapport de vitesse et en cas d'actionnement continu de l'installation de sélection (18) dans cette direction il se produit un réglage continu en direction d'une démultiplication plus courte.

10. Dispositif de commande d'une transmission réglable en continu d'un véhicule équipé d'un moteur à combustion interne comportant une installation de sélection qui peut être actionnée dans au moins deux directions, cette installation étant reliée à une unité de commande réalisée de façon que dans un premier mode de fonctionnement, par actionnement manuel, l'installation de sélection puisse influencer directement la démultiplication de la transmission,
**caractérisé en ce que**
l'unité de commande (6) est réalisée pour qu'à partir du début de l'actionnement de l'installation de sélection (18) dans une direction, le rapport de démultiplication est réglé en continu avec une première vitesse de réglage prédéterminée vers une démultiplication plus longue ;
en cas d'arrêt de l'actionnement de l'installation de sélection avant d'atteindre la fin d'une durée prédéterminée, le réglage du rapport de démultiplication se fait jusqu'à une valeur prédéfinie avec une seconde vitesse de réglage plus élevée que la première vitesse de réglage prédéterminée ;
en cas d'actionnement de l'installation de sélection (18) qui se prolonge au-delà de la durée prédéterminée (t1), le réglage en continu en direction d'une démultiplication plus longue se fait avec une troisième vitesse de réglage prédéterminée, inférieure à la seconde vitesse mais non inférieure à la première vitesse de réglage, jusqu'à ce que l'actionnement soit arrêté et en cas d'actionnement de l'installation de sélection (18) dans l'autre direction, le réglage se fait de façon analogue en direction d'un rapport de démultiplication plus court.

11. Dispositif de commande selon la revendication 9 ou 10,
**caractérisé en ce que**
l'unité d'actionnement (6) est réalisée pour sélectionner la vitesse de réglage (VG) en fonction de la durée d'actionnement (VG= f(t)) ou de la pression d'actionnement (VG = f(p)) exercée sur l'installation de sélection (18).

12. Dispositif de commande selon l'une des revendications 9 à 11,
**caractérisé en ce que**
l'unité de commande (6) est réalisée pour qu'en cas de deux actionnements de l'installation de sélection (18) qui se suivent dans une fenêtre de temps définie, dans une direction ou en cas de passage d'une résistance dans cette direction et réception d'un signal correspondant, un programme de conduite automatique particulier est choisi pour lequel un rapport de transmission est toujours sélectionné automatiquement en fonction des paramètres de fonctionnement saisis et pour terminer de nouveau ce programme de conduite lorsque l'installation de sélection (18) est de nouveau déplacé la première fois dans l'autre direction.

13. Dispositif de commande selon la revendication 12,
**caractérisé en ce que**
l'unité de commande (6) est réalisée pour qu'à la fin du programme de fonctionnement automatique, on conserve le dernier rapport réglé.

14. Dispositif de commande selon la revendication 12 ou 13,
**caractérisé en ce que**
l'unité de commande (6) est réalisée pour régler dans le programme de fonctionnement automatique un programme de fonctionnement pour une économie maximale et/ou une puissance maximale.

15. Dispositif de commande selon l'une des revendications précédentes,
**caractérisé en ce que**
l'unité de commande (6) est réalisée pour permettre en plus un second mode de fonctionnement pour lequel l'unité de commande (6) sélectionne automatiquement un rapport de la boîte de vitesse à partir des signaux d'une installation de sélection (18) définissant un niveau de conduite ou un autre commutateur ou d'autres paramètres de fonctionnement du véhicule tels que l'angle du volet d'étranglement, la vitesse du véhicule et le régime moteur.

16. Dispositif de commande selon la revendication 15,
**caractérisé en ce que**
l'installation de sélection (18) comporte un levier sélecteur qui peut se déplacer dans deux couloirs de commutation de préférence parallèles, le premier couloir de commutation étant associé au premier mode de fonctionnement et le second couloir de commutation au second mode de fonctionnement, les deux couloirs de commutation étant reliés par un couloir de liaison et en cas d'actionnement du levier sélecteur pour passer d'un couloir de commutation à l'autre, le mode de fonctionnement associé s'établit.

17. Dispositif de commande selon l'une des revendications 9 à 14,
**caractérisé en ce que**
l'installation de sélection (18) comporte une unité de commande à touches de préférence au niveau du volant du véhicule.
